(19) Europäisches Patentamt
European Patent Office
Office européen des brevets

(11) Publication number: **0 346 585 A2**

(12) **EUROPEAN PATENT APPLICATION**

(21) Application number: **89106642.5**

(51) Int. Cl.4: **B26D 7/30 , B23D 33/00**

(22) Date of filing: **13.04.89**

(30) Priority: **14.06.88 JP 144839/88**

(43) Date of publication of application: **20.12.89 Bulletin 89/51**

(84) Designated Contracting States: **DE IT**

(71) Applicant: **MANYOU CO., LTD.**
**7-3, 1-chome Oyodokita**
**Kita-ku Osaka-shi Osaka(JP)**

(72) Inventor: **Ochi, Toshio**
**2-25, 3-chome, Honjonishi Kita-ku**
**Osaka-shi Osaka(JP)**
Inventor: **Shiokawa, Hiroyasu**
**9-3, 4-chome, Sonenishi-machi**
**Toyonaka-shi Osaka(JP)**

(74) Representative: **Patentanwälte TER MEER - MÜLLER - STEINMEISTER**
**Mauerkircherstrasse 45**
**D-8000 München 80(DE)**

(54) **Method of and apparatus for measuring weight of billet in bar cutting machine.**

(57) In a bar cutting machine which cuts a bar steel stock to a predetermined size, the outer diameter of a bar stock is measured before cutting, the bar stock is cut to a cut length corresponding to a target weight value for billets (S), the weight of the cut billet (S) is measured in a measuring device body (22) within a weight measuring apparatus (16), an error of the measured weight value of the billet from the target weight value is calculated, thereby arithmetically determining a cut length, and the cut length for billets (S) is corrected in correspondence with the error on the basis of the result of the calculation. Cut billets (S) are distributed by a distributing plate (32) in accordance with the weight error.

FIG. 1

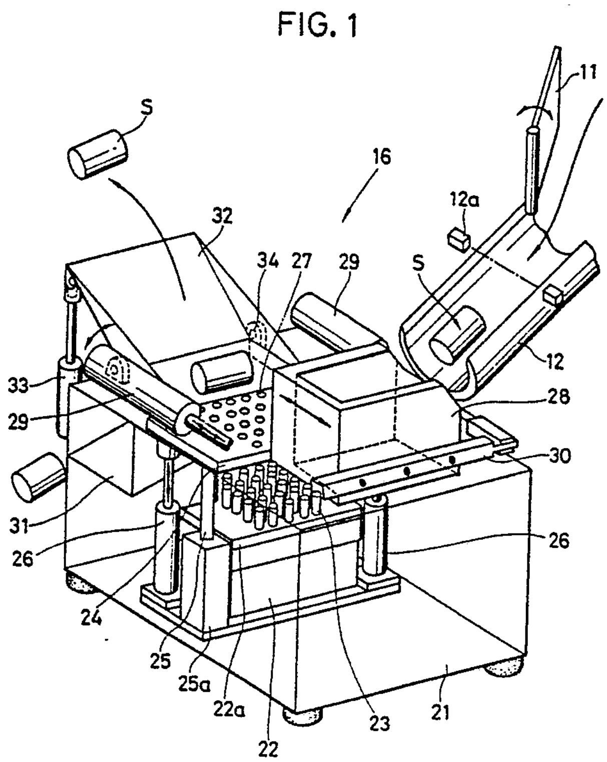


EP 0 346 585 A2

# METHOD OF AND APPARATUS FOR MEASURING WEIGHT OF BILLET IN BAR CUTTING MACHINE

## Technical Field

The present invention relates to a bar cutting machine. More particularly, the present invention pertains to a method of and apparatus for measuring the weight of a billet in a bar cutting machine.

## Background Art

Stocks that are used for relatively small-sized forged parts among various kinds of machine parts are prepared by cutting a bar steel (bar stock) of continuous length having a circular or square cross-section into billets having a predetermined length or weight by means of a shearing cutting machine. Billets that are prepared by cutting forging stocks are required to have high cutting accuracy. Specifications concerning the required cutting accuracy include, for example, the degree of deformation of the cut surface, the squareness of the cut surface to the side surface of the billet and the error of the actual cut length with respect to a target cut length.

Recently, the accuracy in weight of cut billets has been particullary required with the demand for uniform quality and high accuracy of forged products and also with the spread of closed-forging method. The weight accuracy of cut billets depends strongly on the above-described error of the actual cut length with respect to a target cut length. In addition to this cutting error, variations in the sectional areas of bar stocks as being parent materials of billets cause errors in the weight accuracy. Bar stocks which are shipped from steel mills are marketed in the form of bundles each including several tens of sections of 5 to 6 meters prepared approximately to specifications.

It is said that, as a general tendency, these bar stocks greatly vary from each other particularly in terms of the sectional area, particularly in units of bundles of bar stocks. Strictly speaking, even in comparison between bar stocks in the same bundle, the sectional areas of bar stocks cannot be the same, and even in measurement of size of a single bar stock at several points in its lengthwise direction, the cross-sectional areas of different portions of the bar stock cannot be the same. From this point of view, it is possible to say that all the sectional areas of cut billets vary at all times. However, there is a tendency in the variation of the sectional area. More specifically, if a continuous curve of variations in the sectional area in the lengthwise direction is drawn for each bar, in many cases there is no stepwise sudden change.

Under the above-described circumstances, cutting machine manufacturers have taken various measures and proposed various improved techniques to cut billets accurately so that the weights of cut billets are coincident with a target value and uniform. Among them, a means for eliminating errors in the cut length was first adopted in shearing of bar steels. This is arranged as shown in Fig. 11. More specifically, a sizing stopper 100 is provided in the same mechanism system as the cutting blades of a cutting machine so that the leading end of a bar stock which is to be cut is brought into contact with the surface of the sizing stopper 100. That portion of the bar stock which is between the sizing stopper 100 and the cutting blades 101, 102 is set to a set length L and is subjected to a pressure P applied from feed rollers 103. Under these conditions, shearing is conducted with a combination of the movable blade 101 and the stationary blade 102.

This method has almost solved the problem of variations in the cut length L of billets S which is one of the critical causes of errors in the weight of billets. Fig. 12 exemplarily shows a cutting machine which is designed so that the outer diameter of the bar stock 104 is measured with an outer-diameter measuring device 111 and the measured value is fed back to a correction device 110 to correct the cut length. An optical device 111 for measuring the outer diameter of bar stocks is incorporated in the cutting machine system, as shown in Fig. 12, so that it is possible to cope with variations in the sectional area of bar stocks.

More specifically, for each bar stock 104 which is to be cut, the sectional area at one point in the leading end portion thereof is calculated and a cut length L corresponding to a given billet weight is calculated in an arithmetic device 112 with the density of the bar stock 104 taken into consideration. After the sizing stopper 100 has been automatically moved for fine adjustment and then fixed, the bar stock 104 is fed so as to abut against the surface of the sizing stopper 100 and, in this state, shearing is conducted to cut a billet.

The system shown in Fig. 12 enables highly satisfactory results to be obtained in theory if it is possible to set a cut length L corresponding to the sectional area of each billet S through adjustment before shearing is conducted. In practice, however, it is considerably difficult to effect measurement for all billets S before cutting from the viewpoint of productivity.

It is, therefore, actual practice to measure the sectional area only at one point in the leading end portion of one bar stock 104 and continuously cut this bar stock 104 to the tail end with the sizing stopper 100 unmoved for adjustment but fixed until a measured value representing the sectional area at one point of a subsequent bar stock 104 arrives. This system is capable of coping with dimensional variations among bundles, which greatly vary from each other in the sectional area of bar stocks 104, and among bar stocks 104 in one bundle.

The above-described system is further capable of minimizing the loss due to suspension of cutting during the measurement of the sectional area, but it cannot cope with subtle variations in the sectional area through a single bar stock 104. Further, in this bar cutting machine, when a bar stock 104 having, for example, a diameter of 50 mm and a length of 6 m is to be cut to a length of 100 mm, the bar stock 104 is fed to the rollers 103 from a stock stand so as to advance toward the cutting jig.

On its way to the cutting jig, the bar stock 104 is once suspended after the leading end thereof has passed through the outer-diameter measuring device 111 and, after a measuring time, about 2 seconds, has elapsed, the bar stock 104 advances again until it abuts against the sizing stopper 100 within the cutting jig. At this time, a bar stock 104 immediately preceding the bar stock 104 concerned has already been cut at its trailing end and the sizing stopper 100 has been already informed from the arithmetic device 112 of a specified size L corresponding to the measured diameter of the bar stock 104 concerned and therefore has already been activated by a servomotor. In other words, the sizing stopper 100 has been already moved for adjustment and fixed so that the leading end portion of the bar stock 104 is ready to be cut to a billet S with a measured weight.

In the cutting machine of this example, about 1 second is required to cut one billet S and, therefore, if the above-described stock is cut continuously, it should be possible to produce 60 billets S per minute. However, the actual output of billets S is about 50 billets S per minute since the time needed to dispose of the tail end portion of the stock and the time required for the outer-diameter measuring device 11 to effect measurement are included. Thus, the system in which the outer diameter at one point of a bar stock 10 is measured causes a loss in production in actual practice. Accordingly, the technique whereby the cut length is constantly controlled in accordance with variations in the sectional area of one bar stock 104 has great difficulty in making uniform the weights of cut billets S.

Assuming that billets S are successively cut from one bar stock with an invariable length L arithmetically determined from the diameter of the bar stock measured only at one section thereof [see Fig. 13(a)] and the weights of all the billets S are measured, the weights of the billets S will be plotted, for example, as shown in Fig. 13(b). In Fig. 13(b), the curves A, B and C show changes in the billet weight in the lengthwise direction. For example, the curve C shows changes in the billet weight in the case where the sectional area of the bar stock is judged to be apparently large.

In the case of the curve C, a portion of the bar stock which has a relatively large sectional area is measured and, with the measured sectional area of that portion being regarded as a reference sectional area, an apparent weight correction is made; therefore, the cut length L is instructed to be corrected to a shorter length than the actually correct one and cutting is effected with the erroneously corrected cut length L. As a result, the weights of billets S are relatively small as a whole, as shown by the curve C. Similarly, when a portion of the bar stock which has a relatively small sectional area is measured, the weights of billets S are those shown by the curve B. In the case where the bar stock is measured, by chance, at a point such as the point A where an average sectional area of the stock bar is available, it is possible to obtain the billet weight curve A which is approximate to the ideal weight error limits $\pm\alpha$ (described later).

Thus, the above-described prior art system is effective against large variations in the sectional area among bundles and sectional area variations among bar stocks in one bundle in regard to allowable weight error limits $\pm\beta$ (described later) with respect to the target billet weight $W_0$. However, there is a possibility that billets S will be rejected because of departure from the allowable weight error limits as shown by the curve B in Fig. 13(b).

These days, the weight error of billets S must be minimized and billets S which fail to satisfy the allowable weight error limits $\pm\beta$ are rejected as scraps. Since it is necessary to minimize nonconforming billets S, there is also a need to cope with minute variations of the sectional area through each particular bar stock.

## Disclosure of the Invention

It is an object of the present invention to provide a method of measuring the weight of a billet in a bar cutting machine which enables a billet to be cut with a high weight accuracy irrespective of variations in shape of a bar steel stock, and also provide an apparatus for said method.

It is another object of the present invention to provide a method of measuring the weight of a billet in a bar curring machine which enables a reduction in the billet weight measuring cycle, and also provide an apparatus for said method.

To these ends, the present invention provides a method of measuring the weight of a billet in a bar cutting machine which cuts a bar steel stock to a predetermined size, characterized by comprising: the outer-diameter measuring step for measuring the outer diameter of a bar stock before cutting; the billet cutting step for cutting the bar stock to a cut length corresponding to a target weight value for billets; the billet weight measuring step for measuring the weight of the cut billet; the calculating step for calculating an error of the measured weight value of the billet from the target weight value, thereby arithmetically determining a cut length; and the correcting step for correcting the billet length in correspondence with the error on the basis of the result of the calculation.

In one embodiment of the present invention, allowable weight error limits by which a billet is judged to be usable or unusable and ideal weight error limits which are less than the allowable weight error limits are determined and, when a billet measured in the weight measuring step is within the ideal weight error limits, the correction of the cut length is not conducted, but only when the billet is out of the ideal weight error limits, the correction of the cut length is conducted.

According to another aspect of the present invention, there is provided an apparatus for measuring the weight of a billet in a bar cutting machine which cuts a bar steel stock to a predetermined size, characterized by comprising: a measuring box body; a slide plane surface formed on the measuring box body; transfer means slidably mounted on the slide plane surface for receiving and discharging a cut billet; transfer driving means for driving the transfer means; and a measuring device for measuring the weight of the billet.

The weight measuring apparatus may further comprise: an elevating plate vertically movably provided inside the measuring box body so that the elevating plate, together with the billet placed thereon, can be selectively set so as to be flush with the slide plane surface; elevating plate driving means for vertically driving the elevating plate; and a measuring device provided in the path of travel of the elevating plate for measuring the weight of the billet cut.

The weight measuring apparatus may also be arranged such that the elevating plate is provided with a plurality of through-holes and sensing pins which extend through the through-holes, respectively, are provided in such a manner as to stand on a scale pan of the measuring device.

The weight measuring apparatus may further have a distributing plate enabling selection of either one of the two plane surfaces, that is, a plane surface which is flush with the slide plane surface and a plane surface which is different from it, thereby distributing the billet weighed to either one of the two directions.

The above-described measuring device may be vertically moved in place of the elevating plate. In addition, the transfer means may be a slide box and the measuring device may be disposed at a position where the slide box receives the billet.

By virtue of the above-described arrangement, in a bar cutting machine which cuts a bar steel stock to a predetermined size, the outer diameter of a bar stock is measured with an outer-diameter measuring device before cutting and the bar stock is out to a cut length corresponding to a target weight value for billets with the bar cutting machine. The weight of the cut billet is measured with the weight measuring apparatus and an error of the measured weight value of the billet from the target weight value is calculated, thereby arithmetically determining a cut length for correction, and the position of the stopper for the bar stock is corrected in correspondence with the error on the basis of the result of the calculation. Allowable weight error limits by which a billet is judged to be usable or unusable and ideal weight error limits which are less than the allowable weight error limits are determined and, when a billet is within the ideal weight error limits, the correction of the cut length is not conducted. Thus, the measuring cycle is shortened and it is possible to minimize the installation space.

## Brief Description of the Drawings

Fig. 1 is a perspective view of an apparatus for measuring the weight of a billet;

Figs. 2(a), 2(b) and 2(c) show a bar cutting machine;

Fig. 3 schematically shows a billet distributing system;

Fig. 4 shows one example of variations in weight of billets;

Fig. 5 is a plan view showing a billet distributing system;

Figs. 6(1) to 6(10) show sequentially the operation of the weight measuring apparatus;

Fig. 7(a) is a functional block diagram showing signals input to and output from the control board;

Fig. 7(b) is a flowchart showing sequentially the operation of the entire system of the bar cutting machine;

Fig. 8 is a perspective view of a second embodiment of the weight measuring apparatus;

Fig. 9 is a side view of a third embodiment of the weight measuring apparatus;

Fig. 10 shows a fourth embodiment of the weight measuring apparatus;

Fig. 11 shows a prior art of bar cutting machine;

Fig. 12 shows another prior art of bar cutting machine; and

Figs. 13(a) and 13(b) show one example of variations in weight of billets.

## Detailed Description of the Invention

### Outline of Cutting Machine

An outline of one embodiment of the present invention will be described hereinunder with reference to Figs. 2(a), 2(b) and 2(c). Figs. 2(a), 2(b) and 2(c), which are front, plan and side views, respectively, show in combination a cutting machine and peripheral devices thereof to which the method of and apparatus for measuring the weight of a billet according to the present invention are applied. The system comprises a cutting machine body 1, a feed roller device 2 for feeding a bar stock to the cutting machine body 1, a stock stand 3 which stocks a large number of bar stocks and supplies them one by one to the feed roller device 2 as occasion demands, an outer-diameter measuring device 4 for optically detecting an outer diameter of each stock (an outer shape in the case of stocks other than those having a circular cross-sectional configuration), and a control board 9 incorporating an NC arithmetic device which gives various kinds of instruction to each of the above-described devices and which also confirms information concerning these devices.

More specifically, the cutting machine body 1 comprises a press 5 for generating a pressure for cutting, a cutting jig 8 incorporating cutting blades, a sizing stopper and a mechanism for driving and fixing the stopper, a pinch roller device 6 which presses a bar stock in the axial direction so as to feed it to the stopper fixed, and a chute 7 for discharging a cut billet S to the outside of the machine.

The chute 7 branches off at the distal end thereof, as described later, so that a billet S cut to a specified size advances as being a normal product and is received in a billet receiving box. However, when the tail end portion of a bar stock which is short of a predetermined billet weight is dropped on the chute 7, a distributing plate is automatically switched over so as to open to a scrap chute side, thereby guiding the tail end portion to a scrap pallet.

### Outline of Billet Distributing System

An outline of the billet distributing system according to the present invention will next be explained with reference to Fig. 3. ① First, one bar stock is measured at one point thereof with the outer-diameter measuring device. ② A cut length L is temporarily determined and first cutting of the bar stock is conducted. ③ A billet S which comes out of the chute is immediately measured with the weight measuring apparatus to examine it for a weight error. ④ If the measured value is within the ideal weight error limits $\pm\alpha$, cutting is continued. At this time, if the measured weight value is within the limits $\pm\alpha$ and sufficiently close to the target weight value $W_0$, cutting may be continued without measuring the weight of every cut billet S and measurement may be conducted per predetermined number of billets (the conforming billet which has been measured is returned to the normal billet chute directly or through a chute of the weight measuring apparatus). ⑤ If the measured value is out of the ideal weight error limits $\pm\alpha$, a correction is made by a length corresponding to a weight obtained by subtracting the target weight value $W_0$ from the measured value W, i.e., $W-W_0$. ⑥ After the correction, cutting is carried out and the weight of a cut billet is confirmed. ⑦ If the measured value should be out of the allowable weight error limits $\pm\beta$ the billet is deposited in the rejected billet pallet directly or through the rejected billet chute from a chute of the weight measuring apparatus.

The point of this system is that ideal weight error limits $\pm\alpha$ having a smaller absolute value than that of allowable weight error limits $\pm\beta$ by which a billet is judged to be good or bad are set with respect to the target weight value $W_0$ and cut billets S are continuously or intermittently weighed and, every time a measured value of a billet S which departs from the ideal weight error limits $\pm\alpha$ is detected, the billet length is corrected to control the billet weight. In actual practice, the allowable weight error limits $\pm\beta$ are set at about 0.5%, while the ideal weight error limits $\pm\alpha$ are set at about 0.3 to 0.2%.

Fig. 4 shows the results of measurement of the weights of billets S actually processed by this system. As will be clear from the figure, since variations in the sectional area of one bar stock are curvilinear, the weights of all the billets S are enabled to fall within the allowable weight error limits $\pm\beta$ by making correction only at the points $X_E$. Further, since it is possible to clearly discriminate the cut billets S between those which have weights within the limits $\pm\alpha$, those which are within the limits ±β and those which are out of the limits ±β, it is possible to take measures in correspondence with the respective weights of the billets S in the following billet processing steps and therefore the quality of final products that utilize the billets S is improved.

## Billet Distributing System

One embodiment of the billet distributing system will next be explained in detail with reference to Fig. 5. The stock stand 3 stocks bar stocks as being workpieces. The feed roller device 2 which is installed along the stock stand 3 is a stock feed device which receives a bar stock from the stock stand 3 and feeds it to the cutting machine body 1. The outer-diameter measuring device 4 is a known measuring device for measuring the sectional area of a bar stock.

The pinch rollers 6 are adapted to hold a bar stock from the upper and lower sides thereof to receive it from the feed roller device 2 and feed it to the cutting machine body 1. The cutting machine body 1 is a known cutting machine designed to cut a bar stock by shearing action. A billet S cut in the cutting machine body 1 is discharged therefrom and delivered to the billet discharge chute 7. Distributing plates 10 and 11 are provided along the path of the billet discharge chute 7 so as to take in only a selected billet S moving on the billet discharge chute 7.

A sampling chute 12 is a chute for taking in a billet S for sampling when the billet weight is to be measured. A scrap chute 13 is a chute for taking in a scrap such as a tail end portion of a bar stock which cannot be used as a product. Scraps are received in a scrap pallet 14. The weight measuring apparatus 16 is adapted to measure the weight of a single billet S. The structure of the weight measuring apparatus 16 will be described later in detail. A chute 17 is a chute for billets S which are within the allowable weight error limits ±β, the chute 17 leading through a chute 15 to a conforming billet pallet 20 for receiving normal billets.

A chute 18 which is connected directly to the weight measuring apparatus 16 is a chute for billets which are out of the allowable weight error limits ±β the chute 18 leading to a non-conforming billet pallet 19 for receiving rejected billets. When the distributing plates 10 and 11 are not activated, billets S are discharged to the pallet 20 through the discharge chute 7 and the chute 15.

## Weight Measuring Apparatus

The billet weight measuring apparatus 16 will next be explained. Fig. 1 shows a general view of the weight measuring apparatus 16. A measuring box 21 is installed near the discharge chute 7 of the cutting machine body 1, as described above. The measuring box 21 incorporates a measuring device body 22. A scale pan 22a is disposed on the upper side of the measuring device body 22. The scale pan 22a is a plate for placing thereon an article which is to be weighed. A large number of sensing pins 23 are rigidly secured to the scale pan 22a in one unit in such a manner that the sensing pins 23 stand on the scale pan 22a. The distal ends of the sensing pins 23 define the same plane. More specifically, the plane is slighly curved, that is, slightly recessed in the center thereof in a no-load state.

The slighly curved surface is intended as receiving positively a billet S which is to be measured. The sensing pins 23 receive an article placed thereon so that the weight of the article is sensed by a sensor incorporated in the measuring device body 22. Further, an elevating plate 24 is disposed at the upper side of the measuring device body 22, the elevating plate 24 being flush with the upper surface of the measuring box 21 and sharing one plane therewith. Two guide shafts 25 and two piston shafts of cylinders 26 are secured to the bottom of the elevating plate 24 at the corners, respectively, so that the elevating plate 24 is supported on the upper ends of these shafts. The guide shafts 25 are vertically slidably guided by respective guide poles 25a.

The elevating plate 24 is provided with vertical through-holes 27 at positions which correspond to the sensing pins 23, respectively, the through-holes 27 having a slightly larger diameter than the diameter of the sensing pins 23. When the elevating plate 24 lowers with the sensing pins 23 being received through the respective through-holes 27 in the elevating plate 24, the upper end portions of the sensing pins 23 extend through the elevating plate 24 to project therefrom upward so that the distal end faces of the sensing pins 23 define in combination the above-described curved surface. On the upper side of the measuring box 21 is mounted a slide box 28 with no bottom. The slide box 28 is integrally coupled to the piston shafts of two horizontal, parallel cylinders 29 through a coupling member 30.

The slide box 28 is slidable on the upper surface of the measuring box 21 in response to the action of the cylinders 29. When the piston shafts of the cylinders 29 expand, a part of the upper surface of the measuring box 21 defines the bottom of the slide box 28. When the piston shafts of the cylinders 29 contract, the slide box 28 is moved onto the elevating plate 24. In this position, therefore, the bottom of the slide box 28 is defined by the elevating plate 24.

A chute 31 for billets S is provided in another space in the measuring box 21 which is adjacent to the elevating plate 24. A distributing plate 32 is disposed at the upper side of the chute 31 in such a way that the distributing plate 32 covers the inlet of the chute 31. The distributing plate 32 is hinged so as to be pivotal about the axes of hinges 34 which are installed at both sides, respectively, of the distributing plate 32. The distributing plate 32 is driven to pivot by a cylinder 33 which is installed at one side of the measuring box 21.

## Operation of Weight Measuring Apparatus

A billet S cut in the cutting machine body 1 drops on the discharge chute 7 shown in Fig. 5. Normally, the billet S travels straight and passes through the normal billet chute 15 so as to be received in the conforming billet pallet 20. During cutting of a bar stock, the distributing plate 11 that closes the sampling chute 12 is opened at appropriate timing to guide only one billet S to the sampling chute 12. The operation will be explained hereinunder with specific reference to Figs. 1 and 6. Fig. 6 shows sequentially the operation of the weight measuring apparatus. The billet S having passed through the sampling chute 12 drops in the slide box 28 [see Fig. 6(1)]. The drop of the billet S is detected by a detecting means such as a photoelectric tube 12a.

The cylinders 29 are immediately activated to move the slide box 28 onto the elevating plate 24. The billet S in the slide box 28 is carried onto the elevating plate 24 while rolling or slipping [see Fig. 6(2)]. Thereafter, the elevating plate 24.lowers as the cylinders 26 contract, so that the billet S which has been supported by the elevating plate 24 is now supported by the distal ends of the sensing pins 23. With the billet S being supported by the sensing pins 23, the weight of the billet S is measured within the measuring device body 22 [see Fig. 6(3)]. Upon completion of the measurement of weight, the elevating plate 24 rises together with the billet S as the cylinders 26 expand, so that the billet S is placed on the upper side of the measuring box 21 [see 6(4)].

At this time, the slide box 28 has already been removed from the upper side of the elevating plate 24. In consequence, the billet S is not disposed within the slide box 28 but located at an outside position which is adjacent to the slide box 28. More specifically, the slide box 28 is returned to the position facing the sampling chute 12 when the elevating plate 24, together with the billet S, starts to lower. Accordingly, while the billet S is being measured on the measuring device body 22, a subsequent sample billet $S_1$ has already been received.

The explanation will be continued on the assumption that the billet $S_1$ has already been cast in the slide box 28. The slide box 28 moves onto the elevating plate 24, together with the billet $S_1$ [see Fig. 6(5)]. At this time, the billet S is pushed by the side portion of the slide box 18 so as to come out of the elevating plate 24 and move onto the distributing plate 32.

Whether the inlet of the chute 31 should be covered with the distributing plate 32 or opened by pivoting the distributing plate 32 by the action of the cylinder 33 is decided on the basis of the error in the weight of the billet S measured in the measuring device body 22. Assuming that the chute 31 is a discharge chute for rejected products, if the measuring device decides the billet S to be rejected and transmits a signal to the control board 9, the cylinder 33 is activated to cause the distributing plate 32 to pivot upward, which results in the chute 31 being opened. Accordingly, the billet S drops into the chute 31 and is received in the non-conforming billet pallet 19 [see Fig. 6(8)].

If the value measured by the measuring device is within the allowable weight error limits, the distributing plate 32 is left covering the chute 31 and the billet S is pushed by the slide box 28 and placed on the upper side of the distributing plate 32. When it has been confirmed by an electrical or mechanical confirming means that the billet S is on the distributing plate 32, the plate 32 is caused to pivot upward for the purpose of carrying the billet S to the outside of the apparatus, thereby guiding the billet S into a predetermined conforming billet pallet 20 [see Fig. 6(6)].

In the embodiment of the weight measuring apparatus 16, a billet S which drops from the sampling chute 12 collides with the upper surface of the measuring box 21 within the slide box 28 and comes to a standstill. Even if the standstill billet S abuts on the side wall of the slide box 28, the billet S is caused to stand up straight or roll during the movement of the slide box 28 and then comes to a standstill on the elevating plate 24. When the elevating plate 24 lowers and stops at its lowermost position, the billet S is supported by the sensing pins 23 projecting out of the through-holes 27 in the elevating plate 24. Thus, the billet S is measured in a stable state and therefore the measurement is completed speedily within a short period of time.

During the measurement, the slide box 28 has already received a subsequent billet $S_1$ [see Figs. 6(3) and 6(4)]. When the elevating plate 24 rising together with the billet S placed thereon reaches its upper position and defines a plane which is flush with the upper surface of the measuring box 21, the slide box 28 moves onto the elevating plate 24, together with the subsequent billet $S_1$ placed therein [see Fig. 6(5)]. At this time, the billet S on the elevating plate 24 is forced to move onto the adjacent distributing plate 32 by the outer wall of the slide box 28. Thus, two billets S are simultaneously moved in this step and therefore the time is shortened by a large margin.

When the distributing plate 32 is opened by the action of the cylinder 33 which is activated depending upon the result of measurement, the inlet of the chute 31 is open, so that the billet S moved as described above drops into the chute 31. Accordingly, the total measuring cycle time is markedly shortened and it is also possible to minimize the installation space.

## Control Board

The arrangement and operation of each of the devices constituting in combination this embodiment have been explained above. In this embodiment, confirmation of the operation procedures and the transfer of signal information between the constituent elements are all electrically effected through the control board 9 which transmits and receives signals and commands. Various processings, for example, the above-described judgement of a billet as to whether it is a conforming or non-conforming product, are all executed in the control board 9 by receiving the results of measurement from the measuring device body 21. Commands for the operation of the bar cutting machine are also all issued from the control board 9.

Fig. 7(a) is a functional block diagram which shows input and output signals and set values, which are input to and output from the control board 9. The circuit that is incorporated in the control board 9 is formed using a commercially available, known relay circuit or a digital circuit provided with a central processing unit (CPU). The details thereof are not disclosed herein. Control of the operation of the cutting machine is effected by a combination of relays and software. The operation of the cutting machine 1 is controlled by the control board 9 through a power unit 40.

The control board 9 is supplied with signals from billet sensors provided at various positions along the chutes to sense the flow of billets S, a measured value of the outer diameter of a stock, the weight of a billet S, etc. The control board 9 is further supplied with numerical values from a weight setting means 41 for previously setting a target weight value for billets S and from an error limit setting means 42 for setting allowable weight error limits $\pm\beta$ and ideal weight error limits $\pm\alpha$ for billets S.

Signals output from the control board 9 drive the coils of electromagnetic valves for the distributing plates 10, 11 and the oil-hydraulic cylinders 26, 29 and 33 to thereby effect control. The position of the stopper 100 for a bar stock is also controlled by driving a servomotor.

## Operation of Entire System

Fig. 7(b) is a flowchart showing the operation of the control board 9 that controls the flow of billets S. The operation will be explained with cross reference to Fig. 5. First, with the feed roller device 2 suspended, a bar stock is rolled from the stock stand 3 and supplied to the feed roller device 2, as has been described in connection with Fig. 5. The rollers are then rotated to feed the bar stock into the outer-diameter measuring device 4. When the leading end portion of the bar stock has passed through the outer-diameter measuring device 4, the feed roller device 2 is suspended and the outer diameter of the bar stock is measured ($P_1$). The measured numerical value is input to the control board 9 [see Fig. 7(a)] to determine a cut length L corresponding to a target weight.

The control board 9 gives a cut length command to the cutting machine body 1 to drive the stopper so as to set a cut length L ($P_2$). The feed roller device 2 resumes rotation to feed the bar stock to the cutting machine body 1. With the bar stock being pressed by the pinch roller device 6, first cutting is conducted ($P_4$). The cut billet S is discharged from the discharge chute 7. At this time, the billet S is guided into the sampling chute 12 by the action of the distributing plate 11 and thus received in the weight measurig apparatus 16 ($P_3$ to $P_7$).

The billet S is weighed in the weight measuring apparatus 16 and, if the weight is within the ideal weight error limits $\pm\alpha$ ($P_8$) or within the allowable weight error limits $\pm\beta$ ($P_{10}$), the billet S is guided to the chute 17 for normal products and received in the conforming billet pallet 20. If the value of the measured billet S is out of the limits $\pm\beta$, the billet S is received in the non-conforming billet pallet 19 through the chute 18 ($P_{11}$). When the measured weight value is out of the ideal weight error limits $\pm\alpha$, a command is immediately given to the cutting machine body 1 to correct the cut length through the control board 9.

Similarly, if the measured value is within the limits $\pm\alpha$, the cutting machine body 1 continues cutting ($P_{13}$), and the cut billets S travel straight through the discharge chute 7 and the chute 15 and are received in the conforming billet pallet 20. Thereafter, sampling is conducted per several billets ($P_9$`) and one billet S is guided into the sampling chute 12 to monitor the weight of billets S. The tail end portion of each bar stock which remains in the end of the cutting of the bar stock is guided into the chute 13 by activating the distributing plate 10 and thereby received in the scrap pallet 14.

Fig. 8 shows another embodiment of the weight measuring apparatus. This embodiment is identical with the above-described embodiment in that the slide box 28 is slidably mounted on the upper side of the measuring device body 22. Similarly, the slide box 28 has no bottom. In this embodiment, however, a slide box stand 50 is disposed in parallel to the measuring device body 22. A drop hole 51 and a discharge hole 52 are formed in the upper and front sides of the slide box stand 50. The discharge hole 52 is communicated with a chute 53.

A distributing plate 54 is a plate member which opens and closes in order to distribute billets into two sorts, that is, conforming billets with normal weight and non-conforming billets. The distributing plate 54 is driven by means of a solenoid or oil pressure (not shown) according to a command from a controller (not shown). A chute 55 is a chute for passing non-conforming billets. A chute 56 is a chute for passing conforming billets. A billet S which is discharged from the billet sampling chute 12 is cast into the slide box 8. Since the slide box 28 has no bottom, the billet S is placed on the upper side of the measuring device body 22.

The measuring device incorporated in the measuring device body 22 measures the weight of the billet S and judges whether or not the measured weight is within the allowable weight error limits. Upon completion of the measurement of weight, the cylinders 29 are activated to cause the slide box 28 to slide on the upper surface of the measuring device body 22 and move onto the slide box stand 50. The billet S is moved together with the slide box 28 and drops into the drop hole 51 in the slide box stand 50. The billet S is discharged to the chute 53 through the discharge hole 52. If this billet S is a non-conforming product, the distributing plate 54 is driven so as to guide the billet S to the chute 55, whereas, if the billet S is normal, it is guided to the chute 56.

Fig. 9 shows still another embodiment of the weight measuring apparatus. Although in the above-described embodiment the elevating plate 24 is moved up and down, in this embodiment the measuring device body 22 is moved up and down by the action of the cylinders 26. The other constituent portions are the same as those in the first embodiment. In the embodiment shown in Fig. 10, the elevating plate 24 is moved up and down by the action of the cylinders 26.

The elevating plate 24 and the pistons of the cylinders 26 are discrete members and not secured to each other. As the cylinders 26 are activated, the elevating plate 24, together with the billet S, is placed on the measuring device body 22. Although the weight of the elevating plate 24 is also measured in addition to the weight of the billet S, the weight of the billet S alone is measured as being a measured weight. In this embodiment, the position where a billet S is received and the position where the weight of the billet S is measured may be set at the same position as in the case of the embodiment shown in Fig. 8.

As has been detailed above, the weight measuring method and apparatus according to the present invention provide advantageous effects: for example, the measuring cycle is shortened and it is possible to minimize the installation space.

## Claims

1. A method of measuring the weight of a billet in a bar cutting machine which cuts a bar steel stock to a predetermined size, characterized by comprising: the outer-diameter measuring step for measuring the outer diameter of a bar stock before cutting; the billet cutting step for cutting the bar stock to a cut length corresponding to a target weight value for billets; the billet weight measuring step for measuring the weight of the cut billet; the calculating step for calculating an error of the measured weight value of the billet from the target weight value, thereby arithmetically determining a cut length; and the correcting step for correcting the billet length in correspondence with said error on the basis of the result of the calculation.

2. A method of measuring the weight of a billet in a bar cutting machine according to Claim 1, wherein allowable weight error limits by which a billet is judged to be usable or unusable and ideal weight error limits which are less than the allowable weight error limits are determined and, when a billet measured in said weight measuring step is within said ideal weight error limits, the correction of the cut length is not conducted, but only when the billet is out of said ideal weight error limits, said correction of the cut length is conducted.

3. An apparatus for measuring the weight of a billet in a bar cutting machine which cuts a bar steel stock to a predetermined size, characterized by comprising: a measuring box body; a slide plane surface formed on said measuring box body; transfer means slidably mounted on said slide plane surface for receiving and discharging a cut billet; transfer driving means for driving said transfer means; and a measuring device for measuring the weight of said billet.

4. An apparatus for measuring the weight of a billet in a bar cutting machine according to Claim 3, which further comprises: an elevating plate vertically movably provided inside said measuring box body so that said elevating plate, together with said billet placed thereon, can be selectively set so as to be flush with said slide plane surface; elevating plate driving means for vertically driving said elevating plate; and a measuring device provided in the path of travel of said elevating plate for measuring the weight of said billet cut.

5. An apparatus for measuring the weight of a billet in a bar cutting machine according to Claim 4, wherein said elevating plate is provided with a plurality of through-holes and sensing pins which extend through said through-holes, respectively, are provided in such a manner as to stand on a scale pan of said measuring device.

6. An apparatus for measuring the weight of a billet in a bar cutting machine according to Claim 5, which further has a distributing plate enabling selection of either one of the two plane surfaces, that is, a plane surface which is flush with said slide plane surface and a plane surface which is different from it, thereby distributing said billet weighed to either one of the two directions.

7. An apparatus for measuring the weight of a billet in a bar cutting machine according to Claim 4, wherein said measuring device is vertically moved in place of said elevating plate.

8. An apparatus for measuring the weight of a billet in a bar cutting machine according to Claim 3, wherein said transfer means is a slide box, said measuring device being disposed at a position where said slide box receives said billet.

Manyou
FH-89-1

FIG. 1

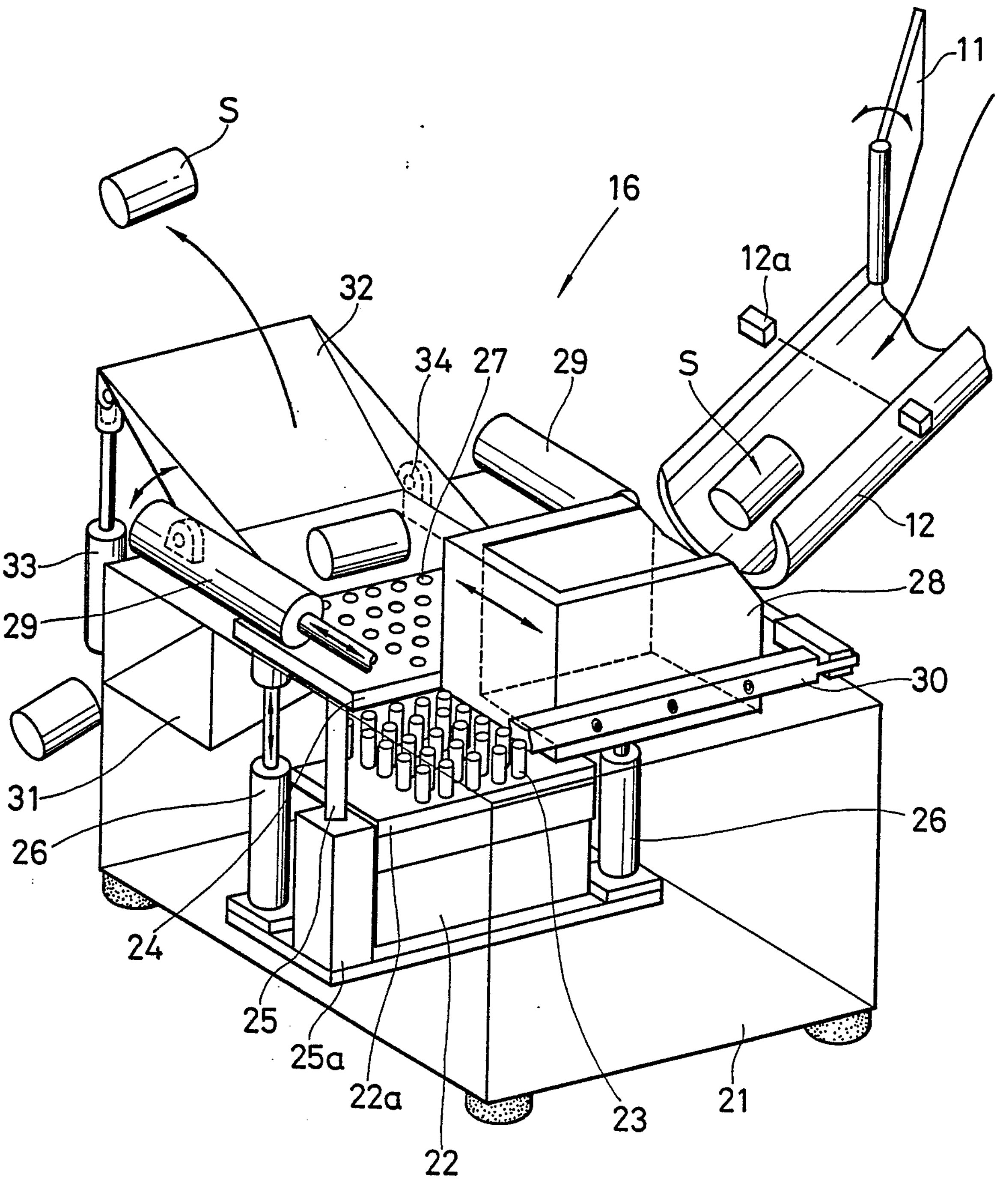

Manyou
FH-89-1

FIG. 2(a)

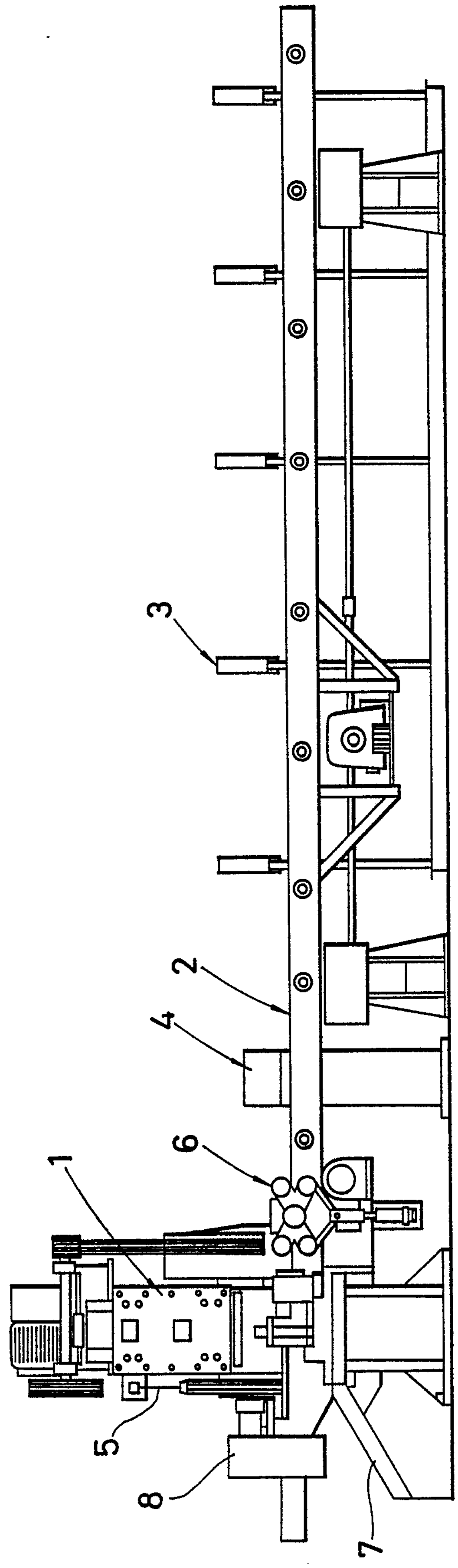

Manyou
FH-89-1

FIG. 2 (b)

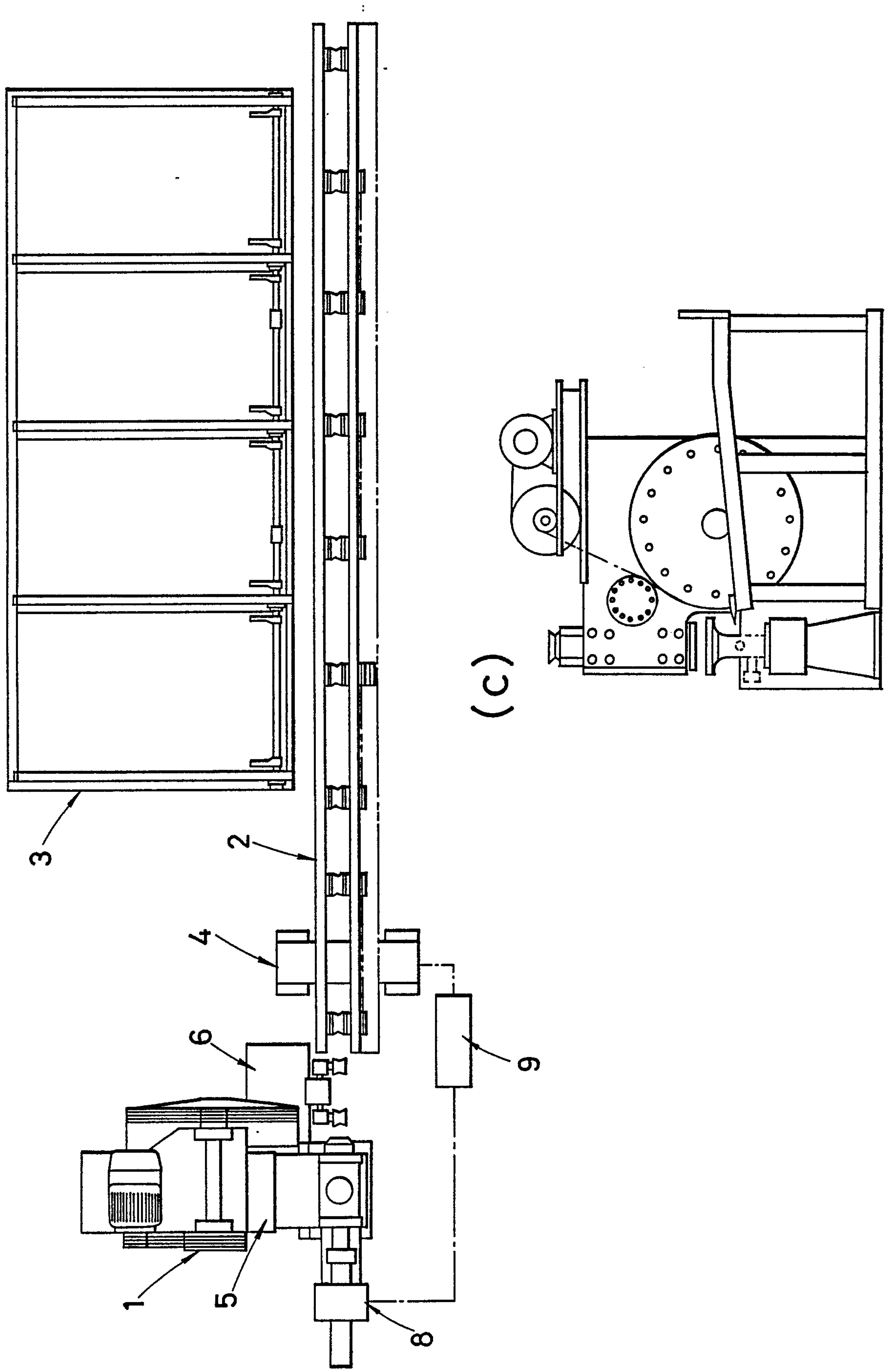


(c)

Manyou
FH-89-1

FIG.3

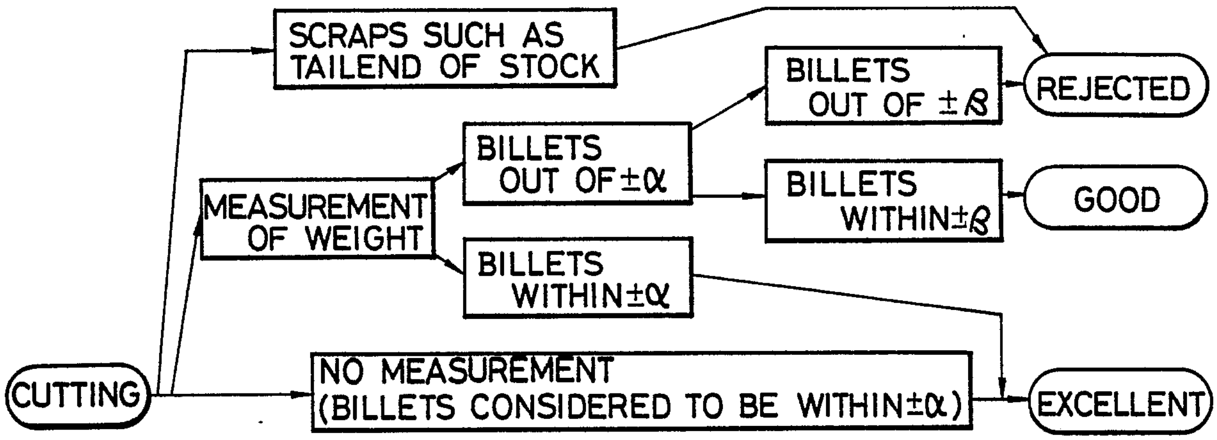


FIG.4

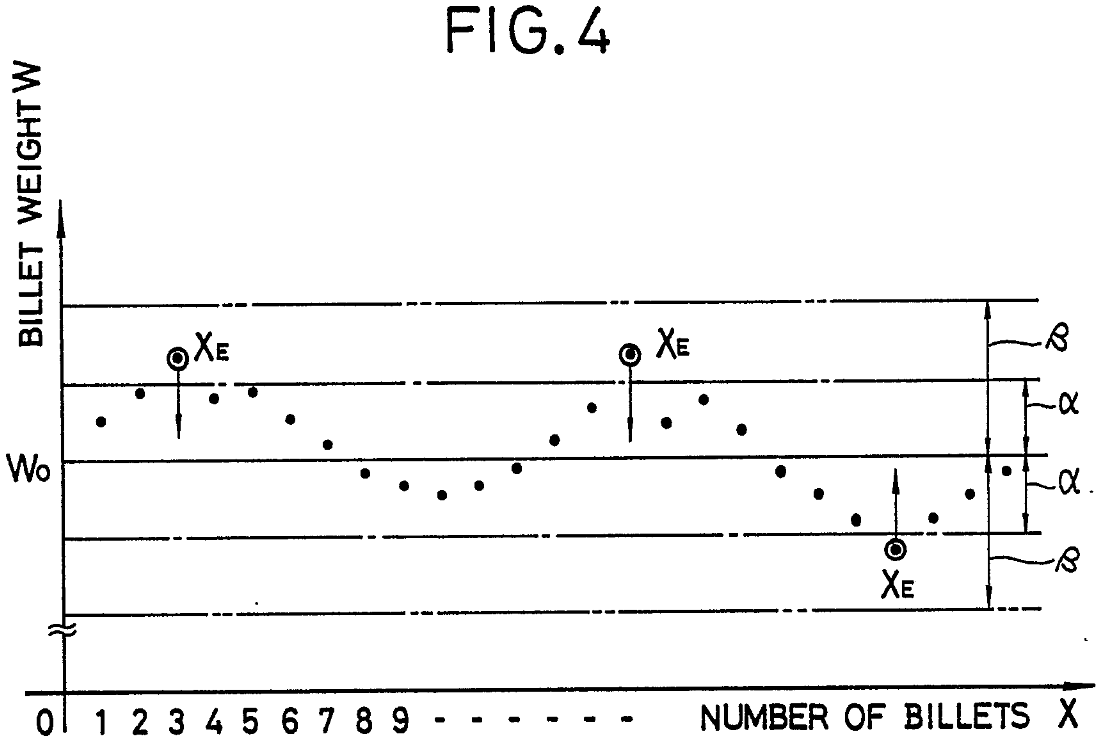

Manyou
FH-89-1

FIG.5

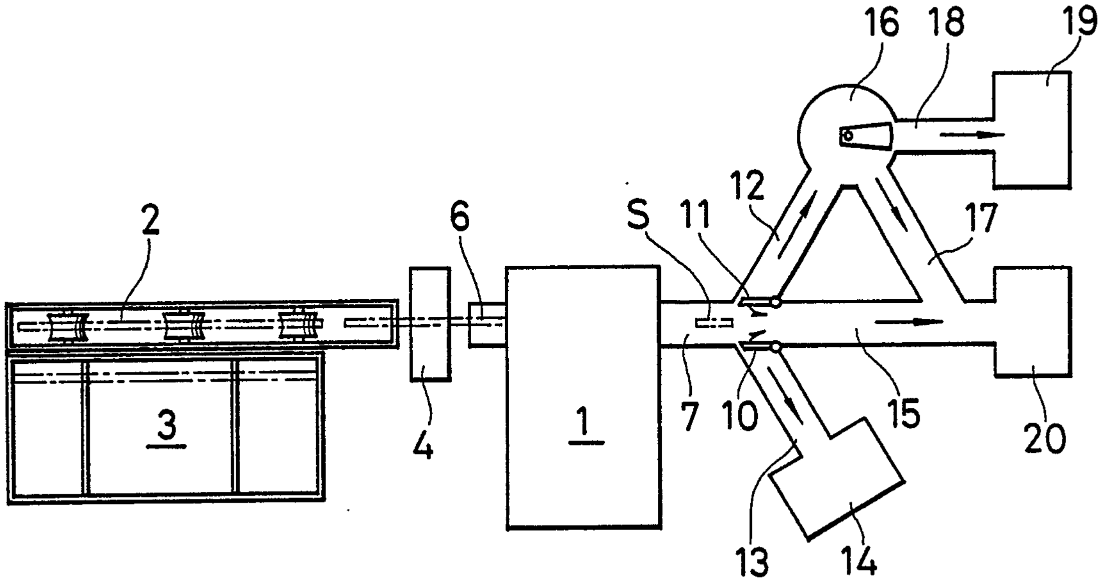


FIG.7(a)

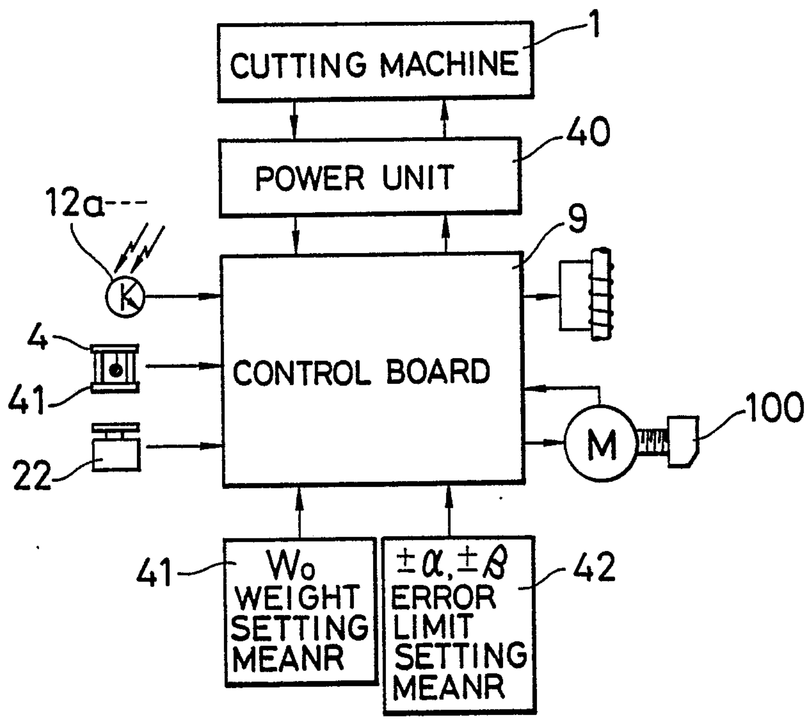

FIG.6

Manyou
FH-89-1

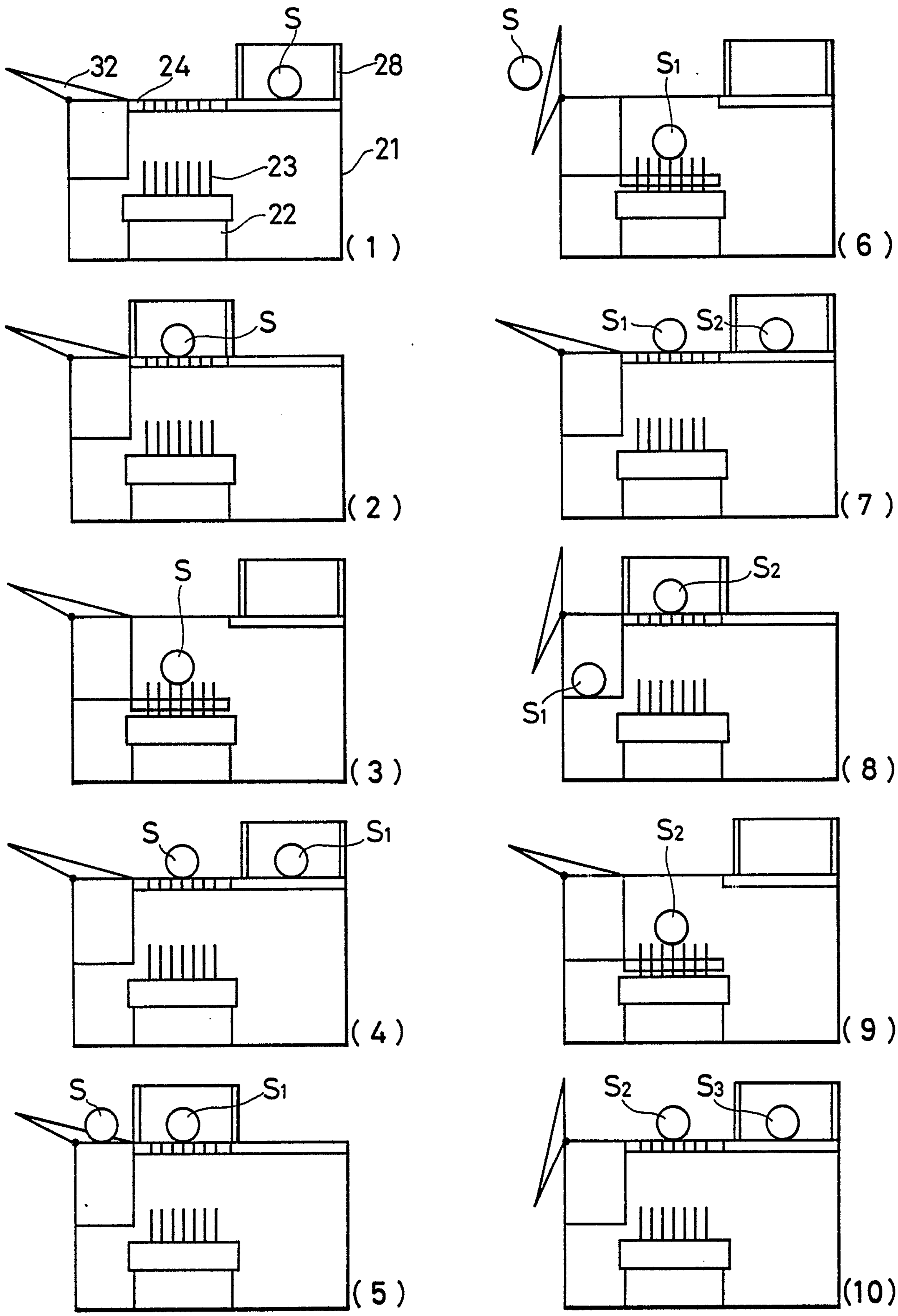

FIG.7 (b)

Manyou
FH-89-1

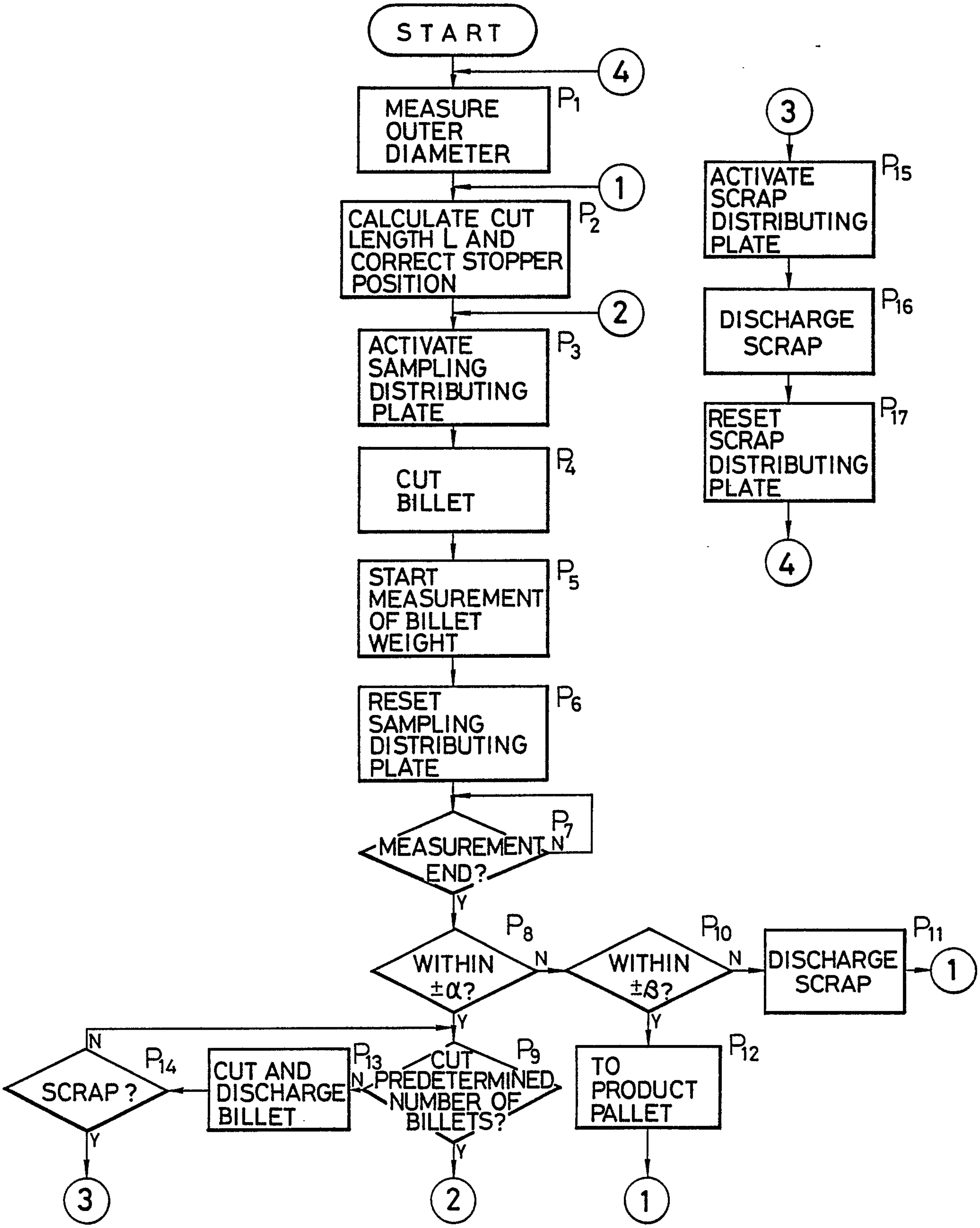

Manyou
FH-89-1

FIG. 8

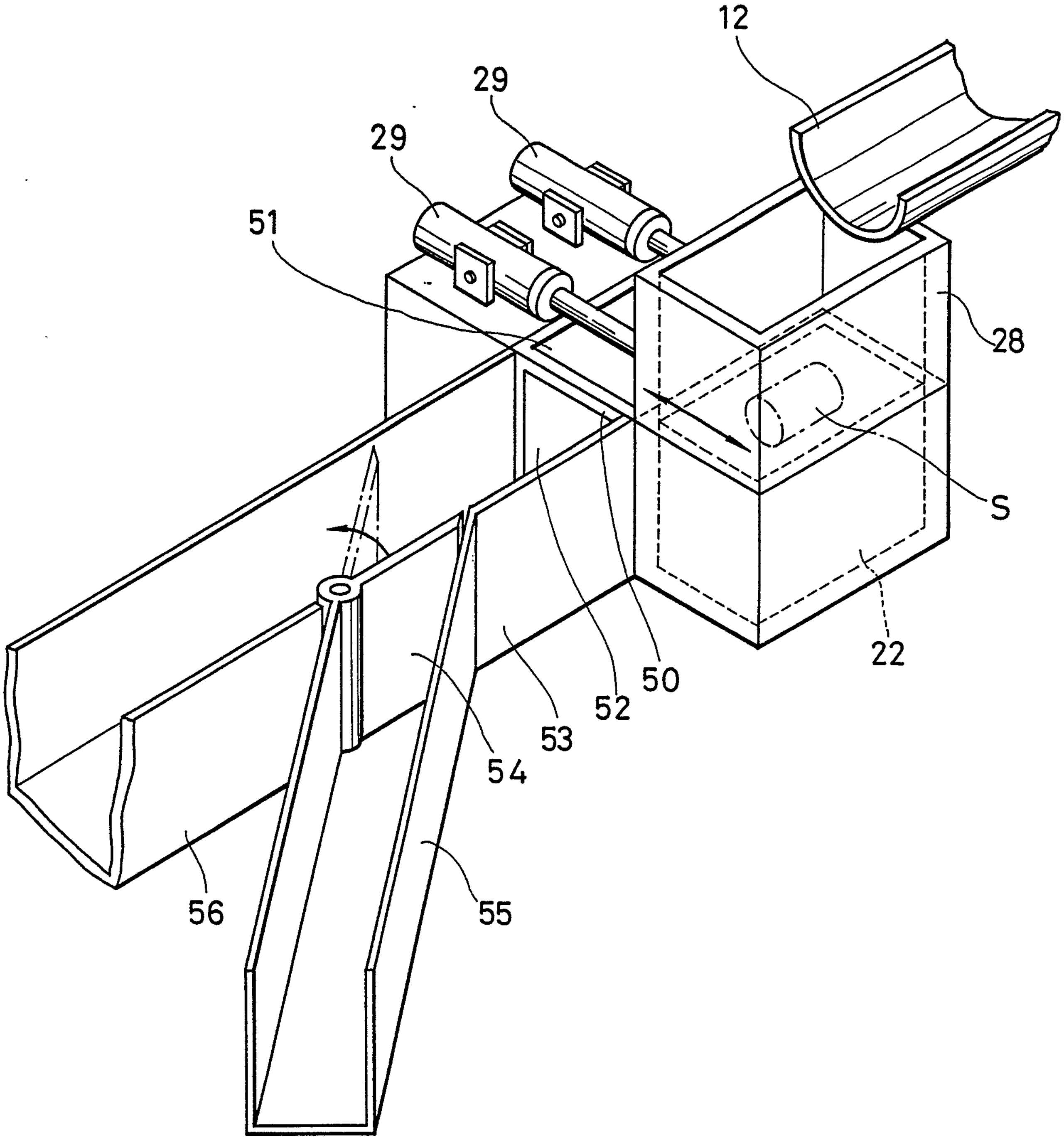

FIG. 9

Manyou
FH-89-1

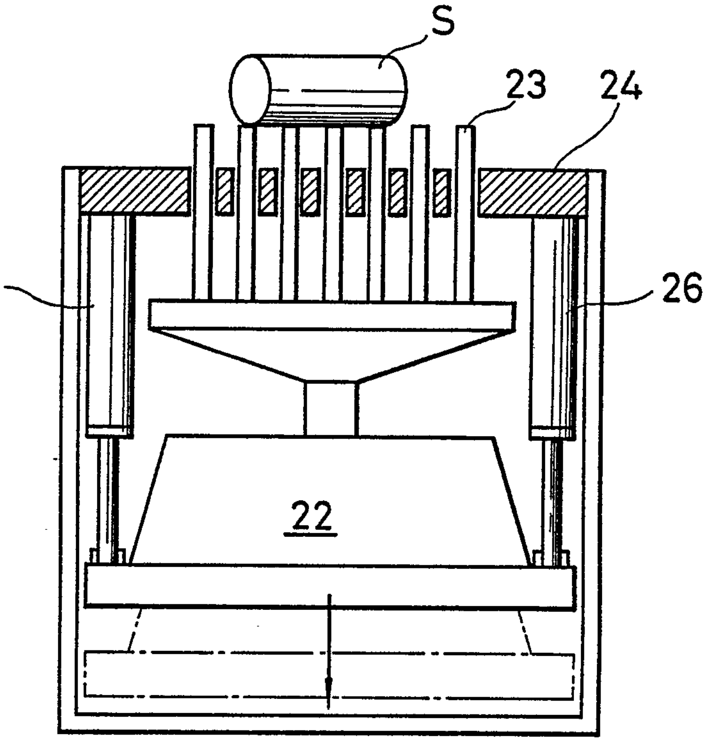


FIG.10

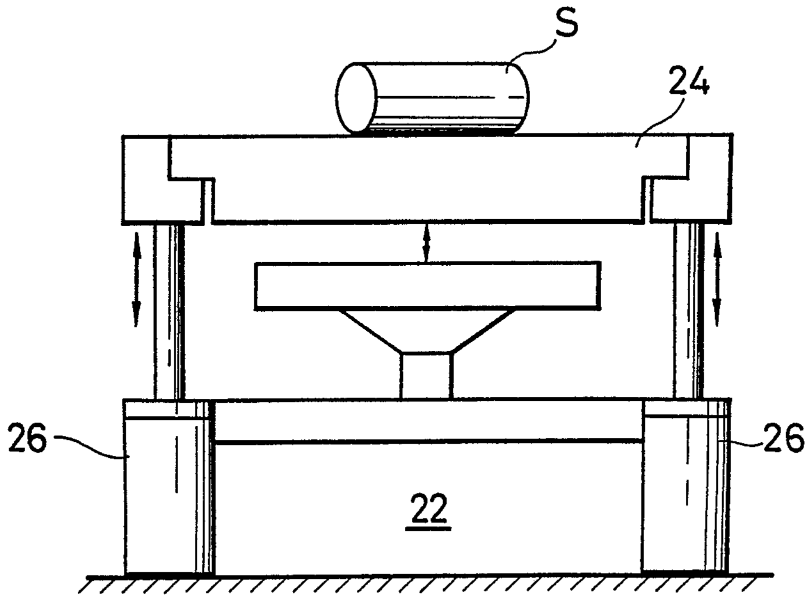

Manyou
FH-89-1

# FIG.11

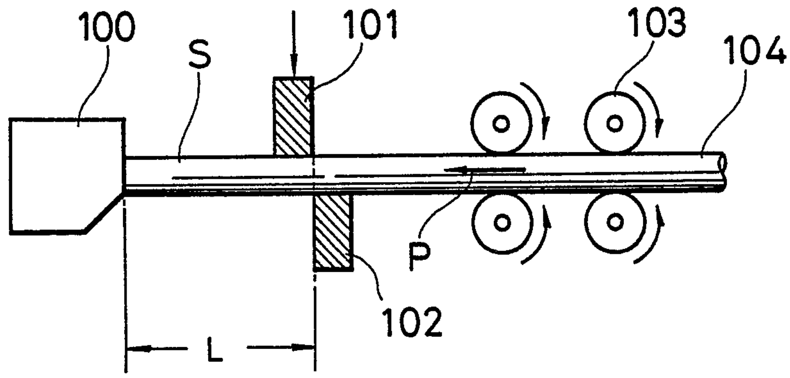


# FIG.12

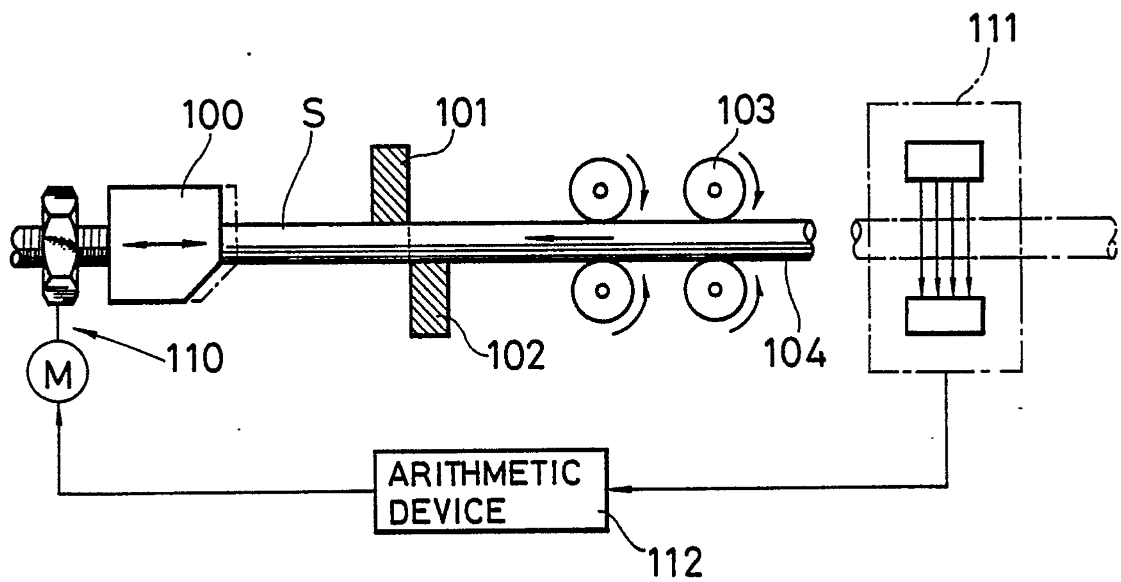

Manyou
FH-89-1

FIG. 13 (a)

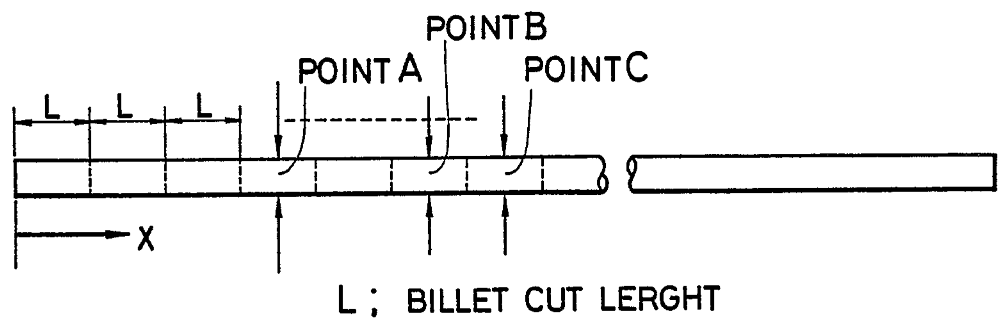


(b)

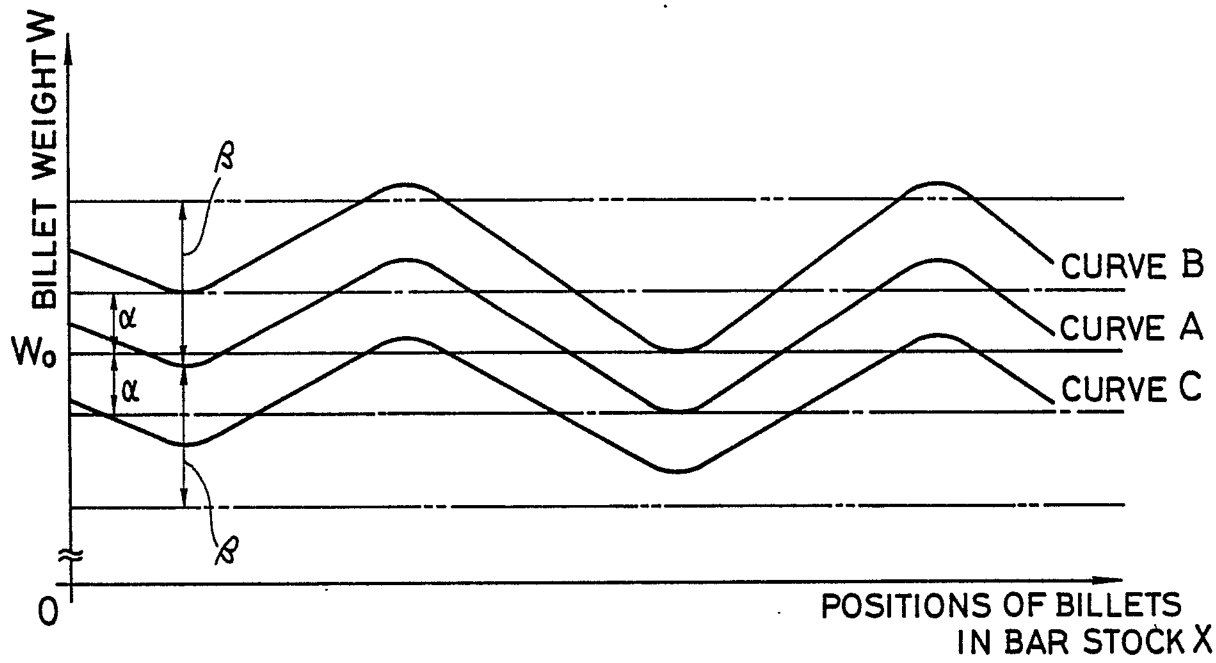


$W_0$ ; TARGET WEIGHT FOR BILLETS
$W_0 \pm \beta$; ALLOWABLE WEIGHT ERROR LIMITS
$W_0 \pm \alpha$; IDEAL WEIGHT ERROR LIMITS